Europäisches Patentamt

European Patent Office

Office européen des brevets

(19)

(11) Publication number: **0 093 596**

**A1**

## (12) EUROPEAN PATENT APPLICATION

(21) Application number: **83302437.5**

(22) Date of filing: **29.04.83**

(51) Int. Cl.³: **C 08 J 3/08**
**C 08 L 57/06, B 01 J 13/00**

(30) Priority: **03.05.82 US 374197**
**03.05.82 US 374198**

(43) Date of publication of application:
**09.11.83 Bulletin 83/45**

(84) Designated Contracting States:
**BE DE FR GB IT NL**

(71) Applicant: **Exxon Research and Engineering Company**
**P.O.Box 390 180 Park Avenue**
**Florham Park New Jersey 07932(US)**

(72) Inventor: **Peiffer, Dennis George**
**10 Churchill Road**
**East Brunswick New Jersey 08816(US)**

(72) Inventor: **Lundberg, Robert Dean**
**4 Brian Drive**
**Bridgewater New Jersey 08807(US)**

(72) Inventor: **Walker, Thad Oscar**
**1311 St. Andrew's**
**Humble Texas 77339(US)**

(74) Representative: **Field, Roger Norton et al,**
**ESSO Engineering (Europe) Ltd. Patents & Licences**
**Apex Tower High Street**
**New Malden Surrey KT3 4DJ(GB)**

(54) Interfacial viscosification of aqueous systems utilizing sulphonated ionomers.

(57) The present invention relates to a process for the viscosification of an aqueous liquid which includes the steps of forming a solvent system of an organic liquid or oil and a polar cosolvent, the polar cosolvent being less than about 10 weight percent of the solvent system, the viscosity of the solvent system being less than 1000 cps; dissolving a neutralized sulfonated polymer in the solvent system to form a solution, the concentration of the neutralized sulfonated polymer in the solution being 0.01 to 0.5 weight percent, the viscosity of the solution being less than 200 cps. Thereafter said solution is admixed or contacted with 5 to 500 volume percent aqueous fluid, the aqueous fluid being immiscible with the organic liquid and with the polar cosolvent wherein the neutralised sulphonated polymer transfers from the organic liquid to the aqueous fluid, thereby causing the aqueous phase to thicken.

The present invention relates to a process for the viscosification of an aqueous liquid which includes the steps of forming a solvent system of an organic liquid or oil and a polar cosolvent, the polar cosolvent being less than 15 weight percent of the solvent system, the viscosity of the solvent system being less than 1,000 cps; dissolving a neutralized or unneutralized sulphonated polymer (water insoluble) in the solvent system to form a solution, the concentration of the neutralized or unneutralised sulphonated polymer in the solution being 0.01 to 0.5 weight percent, the viscosity of the solution being less than 200 cps; and admixing or contacting said solution with 5 to 500 volume percent of the aqueous liquid which is selected from the group consisting of water and aqueous acid solution, the aqueous liquid being immiscible with the organic and with the polar cosolvent wherein the neutralised sulphonated polymer transfers from the organic liquid to the aqueous phase, thereby causing the aqueous phase to gel (i.e. thicken).

The present invention relates to a process for the gelation of an aqueous liquid, wherein the aqueous liquid is selected from water and an aqueous acid solution which includes the steps of forming a solvent system of an organic liquid or oil and a polar cosolvent, the polar cosolvent being less than 15 weight percent of the solvent system and with the viscosity of the solvent system being less than 1000 cps, preferably less than 100 cps. Subsequently a neutralised sulphonated polymer is dissolved in the solvent system to form a solution with a concentration of the neutralised sulphonated polymer in the solution being 0.01 to 0.5 weight percent, the viscosity of the solution being less than 200 cps. Said solution is admixed or contacted with about 5 to 500 volume percent aqueous liquid, the aqueous liquid being immiscible with the organic liquid and with the polar cosolvent wherein the neutralized sulphonated polymer transfers from the organic liquid to the aqueous phase, thereby causing the aqueous phase to gel.

The gelled aqueous phase having a viscosity greater than 50 cps is formed by the addition of aqueous liquid to the water insoluble solution which comprises a water insoluble, neutralised or unneutralised sulphonated polymer, a nonpolar organic liquid and a polar cosolvent, wherein the solution has a viscosity less than 200 cps. The concentration of neutralised or unneutralised sulphonated polymer in the solution is 0.01 to 0.5 weight percent. Upon the addition of aqueous liquid to the solution, the polar cosolvent and water insoluble, neutralised or unneutralised sulphonated polymer rapidly transfers from the solution to the aqueous phase which undergoes immediate gelation. The nonpolar organic liquid can be removed from the gel by conventional liquid extraction methods. The formation of the aqueous fluid having a viscosity of at least 50 cps from the organic solution having a viscosity less than 200 cps, can be quite rapid of the order of 1 minute to 24 hours, more preferably 1 minute to 30 minutes, and most preferably 1 minute to 10 minutes, however, this depends on temperature, shear, solvent type, etc.

The component materials of the present process generally include a water insoluble, ionomeric polymer such as a water insoluble, neutralized sulfonated polymer at a critical concentration level of 0.01 to 0.5 weight percent, a nonpolar organic liquid, polar cosolvent and water or aqueous acid solution.

Gelation of an aqueous phase does not occur, if one employs a conventional unsulfonated polymer or a water soluble, neutralized sulfonated polymer in place of the water insoluble, neutralized sulfonated polymer, but rather only classical phase separation occurs.

In the present invention, the gelation of the aqueous phase occurs by the formation of geometrically shaped spheres of the water insoluble, neutralized sulfonated polymer within the aqueous phase, wherein the water is encapsulated within these geometrically shaped spheres (so-called water-in-water pseudo-emulsion). During the process, approximately 10 weight percent of the nonpolar organic liquid also transfers to the aqueous phase and is encapsulated within these geometrically shaped spheres.

A second aspect of the present invention relates to the use of these materials in aqueous systems containing large concentrations of acid. The sulfonated polystyrenes which are the preferred embodiment of this invention lose their effectiveness (i.e., as a water-in-water pseudo-emulsion former) in salt water, but are enhanced in acid-containing water.

It has been additionally discovered that the addition of a nonionic surfactant can further enhance the gelation of the aqueous acid solution. In acidic solutions, the nonionic surfactant is not needed for stability (25°C), however, the viscosity of these pseudoemulsion systems tends to increase significantly with the addition of small amounts of the nonionic material (typically <0.04g/l).

The nonionic surfactants which can be employed in the present invention include polyethylene oxide - polypropylene oxide - block copolymer (polyols), polyoxyethylene sorbitan fatty acid esters, sorbitan fatty acid esters, fatty acids and fatty acid derivatives such as ethoxylated fatty acid-Armals (Ethofat[R]), amide derivatives such as Armals (Ethomid[R]), stearatic acid and stearate derivatives, fluorine-containing nonionic surfactants, fatty alcohols, alcohol esters, glycinol esters and polyethylene glycol esters. Typical examples of nonionic surfactants are BASF (Pluronics[R]), ICI (Atlas[R]) ICI (Bris[R]) and ICI (Arlacel[R]), ICI (Tween[R] series), 3M (Fluorad[R]) and Shenex (Adol[R]), wherein polyethylene oxide – polypropylene oxide – block copolymer (polyols) is preferred. The nonionic surfactant is added to the solvent system at a concentration of about 0.0001 to about 1.0 weight percent of total solvent, more preferably about 0.001 to about 0.5, and most preferably about 0.001 to about 0.005.

In general, the water insoluble ionomeric polymer will comprise from 10 to 200 meq. pendant ionomeric groups per 100 grams of polymer, more preferably from 10 to 100 meq. pendant ionomeric groups. The ionic groups may be conveniently selected from carboxylate, phosphonate, and sulfonate, preferably sulfonate groups. In most instances, the ionomers utilized in the present invention are neutralized with the basic materials selected from Groups IA, IIA, IB and IIB of the Periodic Table of Elements and lead, tin and antimony, as well as ammonium and amine counterions. Ionic polymers which are subject to the process of the present invention are illimitable and include both plastic and elastic polymers. Specific polymers include sulfonated polystyrene, sulfonated t-butyl styrene, sulfonated ethylene copolymers, sulfonated propylene copolymers, sulfonated styrene/ acrylonitrile copolymers, sulfonated styrene/methyl methacrylate copolymers, sulfonated block copolymers of styrene/ethylene oxide, acrylic acid copolymers with styrene, sulfonated polyisobutylene, sulfonated ethylene-propylene terpolymers, sulfonated polyisoprene, and sulfonated elastomers and their copolymers. The preferred polymers of the present invention are ethylene-propylene terpolymers and polystyrene, wherein polystyrene is most preferred.

Neutralization of the cited polymers with appropriate metal hydroxides, metal acetates, metal oxides, or ammonium hydroxide etc., can be conducted by means well-known in the art. For example, the sulfonation process as with Butyl rubber containing a small 0.3 to 1.0 mole percent unsaturation can be conducted in a suitable solvent such as toluene, with acetyl sulfate as the sulphonating agent, such as described in U.S. Patent 3,836,511. The resulting sulfonic acid derivative can then be neutralized with a number of different neutralization agents such as a sodium phenolate and similar metal salts. The amounts of such neutralization agents employed will normally be equal stoichiometrically to the amount of free acid in the polymer plus any unreacted reagent which is still present. It is preferred that the amount of neutralizing agent be equal to the molar amount of sulfonating agent originally employed plus 10 percent more to insure full neutralization. The use of more of such neutralization agent is not critical. Usually there is sufficient neutralisation agent to effect at least 50 percent neutralization of the sulfonic acid groups present in the polymer, preferably at least 90 percent, and most preferably substantially complete neutralization of such acid groups should be effected.

The degree of neutralization of said ionomeric groups may vary from 0 (free acid form) to greater than 100 mole percent, preferably 50 to 100 percent. With the utilization of neutralized ionomers in this present invention, it is preferred that the degree of neutralization be substantially complete, that is with no substantial free acid present and without substantial excess of the base other than that needed to nsure neutralization. The neutralized ionomers possess greater thermal stability compared to its acid form. Thus, it is clear that the polymers which are normally utilized in the present· invention comprise substantially neutralized pendant groups, and in fact, an excess of the neutralizing material may be utilized without defeating the objects of the present invention.

The ionomeric polymers of the present invention may vary in number average molecular weight from 1,000 to 10,000,000 preferably from 5,000 to 500,000, most· preferably from 10,000 to 200,000. These polymers may be prepared by methods known in the art, for example, see U.S. Patent 3,642,728.

The preferred ionic copolymers for use in the present invention, e.g., sulfonated polystyrene and substituted derivatives thereof, may be prepared by the procedures described in U.S. Patent 3,870,841, filed October 2, 1972, in the names of H. S. Makowski, R. D. Lundberg and G. H. Singhal.

The water insoluble, ionomeric polymers may be incorporated into the organic liquid at a level of from 0.01 to 0.5 weight percent and more preferably from 0.01 to 0.4 weight percent, based on the organic liquid and the polar cosolvent.

Specific examples of preferred ionomeric polymers which are useful in the present invention include sulfonated polystyrene, sulfonated poly-t-butyl styrene, sulfonated polyethylene (substantially noncrystalline), and sulfonated ethylene copolymers, sulfonated polypropylene (substantially noncrystalline), and sulfonated polypropylene copolymers, sulfonated styrenemethyl methacrylate copolymers, (styrene)-acrylic acid copolymers, sulfonated polyisobutylene, sulfonated ethylene-propylene terpolymers, sulfonated polyisoprene, sulfonated polyvinyl toluene and sulfonated polyvinyl toluene copolymers.

The ionomeric polymers of the present invention may be prepared prior to incorporation into the organic solvent, or by neutralization of the acid form insitu. For example, preferably the acid derivative is neutralized immediately after preparation. For example, if the sulfonation of polystyrene is conducted in solution, then the neutralization of that acid derivative can be conducted immediately following the sulfonation procedure. The neutralized polymer may then be isolated by means well-known to those skilled in the art, i.e., coagulation, steam stripping, or solvent evaporation, because the neutralized polymer has sufficient thermal stability to be dried for employment at a later time in the process of the present invention. It is well-known that the unneutralized sulfonic acid derivatives do not possess good thermal stability and the above operations avoid that problem.

It is also possible to neutralize the acid form of these polymers in situ; however, this is not a preferred operation, since in situ neutralization requires preparation of the sulfonic acid in the organic liquid which is to be subjected to the present process, or the acid form of the ionic polymer must be dissolved in said organic liquid. The latter approach may involve handling of an acid form of an ionic polymer which has limited thermal stability. Therefore, it is quite apparent that the preparation and isolation of a neutralized ionic polymer affords the maximum latitude in formulation, less problems in handling polymers of limited thermal stability and maximum control over the final mixture of ionic polymer, polar cosolvent and organic liquid.

The organic liquids, which may be utilized in the present invention, are selected with relation to the ionic polymer and vice-versa. The organic liquid may be selected from aromatic hydrocarbons, cyclic aliphatic ethers, aliphatic ethers, organic aliphatic esters and mixtures thereof.

Specific examples of organic liquids to be employed with the various types of polymers are:

| Polymer | Organic Liquid |
|---|---|
| sulfonated polystyrene | benzene, toluene, ethyl benzene, methylethyl ketone, xylene, styrene, ethylenedichloride, methylene chloride. |
| sulfonated poly-t-butyl-styrene | benzene, toluene, xylene, ethyl benzene, styrene, t-butyl styrene, aliphatic oils, aromatic oils, hexane, heptane, decane, nonane. |
| sulfonated ethylene-propylene terpolymer | pentane, aliphatic and aromatic solvents, oils such as Solvent "100 Neutral", "150 Neutral" and similar oils, benzene, diesel oil, toluene, xylene, ethyl benzene, pentane, hexane, heptane, |

| | octane, isooctane, nonane, decane aromatic solvents, ketone solvents. |
|---|---|
| sulfonated styrene-methyl-methacrylate copolymer | dioxane, halogenated aliphatics, e.g., methylene chloride, tetrahydrofuran. |
| sulfonated polyisobutylene | saturated aliphatic hydrocarbons, diisobutylene, triisobutylene, aromatic and alkyl substituted aromatic hydrocarbons, chlorinated hydrocarbons, n-butyl ether, n-amyl, ether, methyl oleate, aliphatic oils, oils predominantly paraffinic in nature and mixtures containing naphthenic hydrocarbons. "Solvent 100 Neutral", "Solvent 150 Neutral" and all related oils, low molecular weight polymeric oils such as squalene, white oils and process oils having 60 percent or less aromatic content. |
| sulfonated polyvinyl toluene | toluene, benzene, xylene, cyclohexane, ethyl benzene, styrene, methylene chloride, ethylene dichloride. |

The process of the present invention includes incorporating a polar cosolvent, for example, a polar cosolvent in the mixture of organic liquid and water insoluble ionomer to solubilize the pendant ionomeric groups. The polar cosolvent will usually have a solubility parameter of at least 10.0, preferably at least 11.0 and is water miscible and may comprise from 0.1 to 15.0 weight percent, preferably 0.1 to 5.0 weight percent of the total mixture of organic liquid, water insoluble ionomeric polymer, and polar cosolvent. The solvent system of polar cosolvent and organic liquid in which the water insoluble neutralized sulfonated (ionomeric) polymer is dissolved contains less than 10 weight percent of the polar cosolvent, more preferably 0.1 to 5.0 weight percent, and most preferably 0.1 to 5.0 weight percent. The viscosity of the solvent system is less than 1,000 cps, more preferably less than 800 cps and most preferably less than 500 cps.

Normally, the polar cosolvent will be a liquid at room temperature; however, this is not a requirement. It is preferred, but not essential, that the polar cosolvent be soluble or miscible with the organic liquid at the levels employed in this invention. The polar cosolvent may be selected from water soluble alcohols, including di- or tri- functional alcohols, amines, amides, acetamides, phosphates, or lactones and mixtures thereof. Especially preferred polar cosolvents are aliphatic alcohols such as methanol, ethanol, n-propanol, isopropanol, 1,2-propane diol, monoethyl ether of ethylene glycol, and n-ethylformamide.

The amount of aqueous fluid added to the solution of water insoluble, neutralised or unneutralised sulphonated polymer, organic liquid and polar cosolvent having a viscosity of less than 2,000 cps (preferably less than 200 cps), is 5 to 500 volume percent of water, more preferably 10 to 300 volume percent water, most preferably 10 to 200 volume percent water.

The aqueous acid solution of hydrochloric acid, in which the water insoluble neutralised or unneutralised sulphonated polymer thickens, preferably contains less than about 40 weight percent acid, more preferably about 0.1 to about 30 weight percent, and most preferably about 1.0 to about 20 weight percent.

The following examples will demonstrate the performance of sulfonated polystyrene of varying sulfonate levels in several specific aqueous environments.

EXAMPLE 1

It has been observed that under certain conditions, if a hydrocarbon solution containing a low concentration of a sulfonated polystyrene or sulfonated EPDM is mildly agitated with water for a short period of time, a pseudo-emulsion is formed. In the initial formation stage, the type of pseudo-emulsion produced in these systems has a continuous aqueous phase while the hydrocarbon medium is the dispersed phase. It is believed that the sulfonated polymer stabilizes the hydrocarbon/water interface. Upon standing for a short period of time after mixing has occurred, it is observed that approximately 90 percent of the initial hydrocarbon solvent can be separated from the system leaving behind a pseudoemulsion system characterized as a water-in-water pseudoemulsion. Addition of a small amount of nonionic surfactant can be added to facilitate this process. Experimental evidence indicates that free passage of nonpolar organic solvent occurs through the sulfonated polymer membrane and the hydrocarbon solvent is replaced within each sphere by water as the nonpolar, organic solvent passes through the membrane.

As shown in Table I, the essential material needed for the formation of a pseudo-emulsion system in a hydrocarbon/water environment is the water insoluble, neutralized sulfonated polymer. Table I shows that the addition of water to a No. 2 diesel oil (or xylene) solution containing tridecyl alcohol as a cosolvent and/or unsulfonated EPDM (Socabu 55) or polystyrene (Styron 666) results in a classic phase separation of the hydrocarbon and water phases. On the other hand, spontaneous formation of a pseudo-emulsion system occurs in the presence of the sulfonated polymer. In addition, it has been observed that more stable pseudo-emulsion systems are produced with increasing sulfonation level. The nature of the counterion does not impair the interfacial activity of the polymer.

Further confirmation of the interfacial activity of these sulfonated polymers can be obtained utilizing viscosity measurements. The viscosity of several water-in-water pseudo-emulsions as a function of the polymer concentration is shown in Table II. It is readily apparent that due to the particular "macroscopic" structures formed in the aqueous phase, significant viscosification occurs as compared to the dissolution of a water soluble polymer of equivalent molecular weight and concentration. The viscosity of the pseudo-emulsion system at high polymer levels rises, while within the concentration range between approximately 1 and 5 g/l, the viscosity is essentially constant. Only when rather low polymer levels are reached does the viscosity begin to decline again. A comparison of the EPDM and polystyrene data indicates that the nature of the backbone chain may have little influence on the viscosity of the system, while the sulfonate level is of paramount importance. These results can be rationalized by assuming that the sulfonated polymer resides at the water-water interface. This latter observation is supported through the use of light microscopy. Under low magnification (approximately 100X) the structural details of the pseudo-emulsion system can be observed. In the first place, a large number of spheres constitutes a typical pseudo-emulsion system. Secondly, each pseudo-emulsion particle is a spherical structure in which a large volume of water is contained with the polymer film. The continuous phase outside of each particle is identical in composition to the internal aqueous phase.

EXAMPLE 2

Table II shows the relationship between the viscosity of the pseudo-emulsion phase, formed with polystyrene containing various sulfonation levels, as a function of polymer concentration. The viscosity tends to rise at very low polymer concentrations. Outside of this concentration regime, the viscosity remains constant to rather high polymer levels ( $\sim$0.5 g/dl.) The viscosity of the pseudo-emulsion at a particular polymer concentration does increase with higher sulfonation levels. Undoubtedly, this observation is related to both the sphere size and packing within the aqueous phase.

## TABLE I

### FORMATION OF WATER-IN-WATER PSEUDO-EMULSION
### (50 HYDROCARBON/50 WATER)

| Material | Water/Water Pseudo-Emulsion Formed |
|---|---|
| Tridecyl Alcohol | No |
| Socabu 55 or Styron 666 | No |
| Socabu 55/Tridecyl Alcohol | No |
| Zinc Neutralized (10-30 meq.) EPDM | Yes |
| Magnesium and Calcium Neutralized (10 meq.) EPDM | Yes |
| Magnesium and Calcium Neutralized (10 meq.) EPDM<br>Tridecyl Alcohol | Yes |
| Unneutralized Sulfonated (25 meq.) EPDM<br>Tridecyl Alcohol | Yes |
| Sodium Sulfonated (1-6 mole %) Polystyrene | Yes |
| Zinc Sulfonated (1-3 mole %) Polystyrene | Yes |

- 14 -

00093596

## TABLE II

### VISCOSITY* - POLYMER CONCENTRATION DATA
### OF A TYPICAL PSEUDO-EMULSION SYSTEM

| Material | Polymer Concentration (g/l) | Viscosity (cps) |
|---|---|---|
| Sulfonated Polystyrene (Sodium Salt - 1.7 mole %) | 0.25 | 210 |
| | 0.5 | 295 |
| | 1.25 | 315 |
| | 2.5 | 320 |
| | 5.0 | 340 |
| Sulfonated EPDM (Magnesium Salt - 10 meq.) | 0.50 | 160 |
| | 1.25 | 204 |
| | 2.5 | 210 |
| | 5.0 | 210 |

*Viscosity measured with a Brookfield$^R$ viscometer at 30 RPM.

## TABLE III

VISCOSITY* – POLYMER CONCENTRATION DATA OF SEVERAL PSEUDO-EMULSION
SYSTEMS FORMED WITH SEVERAL SODIUM SALTS OF SULFONATED POLYSTYRENES

| Material (mole %) | Polymer Level (g/l) | Viscosity (cps) |
|---|---|---|
| 3.0 | 0.12 | 280 |
|  | 0.5 | 430 |
|  | 1.0 | 480 |
|  | 2.0 | 490 |
| 4.19 | 0.12 | 380 |
|  | 0.25 | 440 |
|  | 0.5 | 570 |
|  | 2.0 | 820 |
| 6.05 | 0.12 | 420 |
|  | 0.25 | 540 |
|  | 0.5 | 820 |
|  | 2.0 | 950 |

*Viscosity measured with a Brookfield$^R$ viscometer at 30 RPM.

- 16 -

0093596

EXAMPLE 3

Due to the aqueous nature of the fluid within the thin membrane of the pseudo-emulsion particle, we observe dramatic changes in viscosity as the shear rate is modified. Table IV shows the viscosity behavior of a typical pseudo-emulsion system in fresh water as a function of the rate of shear. At low shear rates, the viscosity is high, while a decrease is found at higher shear. Furthermore, we observe a marked viscosity decrease as the overall shear rate is increased, which is typical behavior of all pseudo-emulsion systems (i.e. fresh, salt, acid or basic environments). In this particular example, an order of magnitude viscosity change is found over a relatively modest shear rate range. Furthermore, we observe that this behavior is reversible (which again is typical behavior of a pseudo-emulsion system) within the shear rate range presented in this example.

TABLE IV

VISCOSITY - SHEAR RATE BEHAVIOR OF A TYPICAL
PSEUDO-EMULSION SYSTEM IN FRESH WATER

| Material | Shear Rate ($sec^{-1}$) | Viscosity (cps) |
|---|---|---|
| Sulfonated Polystyrene (6.05 mole % - Sodium Salt) | 0.4 | 470 |
| | 0.8 | 390 |
| | 2.0 | 190 |
| | 4.0 | 120 |
| | 8.0 | 70 |
| | 16.0 | 68 |
| | 40.0 | 52 |
| | 79.0 | 45 |

It is evident from these discussions that this invention claims a markedly different process and product than that described in some previous patents covering the same class of polymers in similar mixed solvents. The prior applications were specifically directed at gelation of a hydrocarbon phase by contact of mixed solvents with an aqueous phase and extraction of a water miscible cosolvent from the organic phase, thereby permitting association of the ionic groups and gelation. In this and copending applications, we claim viscosification of the aqueous phase. Such a claim would certainly appear inconsistent and unexpected in view of those prior patent applications. This discussion will attempt to explain these observations on a molecular scale.

We assume that the ionic polymers of this study are dissolved in an organic diluent containing a polar cosolvent (alcohol) via selected solvation. The resulting ionic polymer is thereby homogeneously dissolved without substantial aggregation. Now, if sufficient polymer is present (i.e. >1%) for a conventional high molecular weight polymer, there is an overlap of the polymer coils (i.e., they intermingle and entangle). Under these conditions, if the cosolvent is removed (i.e., by contact with water), then the resultant aggregation of the ionic groups results in a total network or polymer gellation of the hydrocarbon phase occurs.

However, the unexpected observation which is the basis for the present invention is that, if the polymer concentration in the hydrocarbon phase is less than 0.5% or so, the polymer coils no longer are in the overlap regime. Thus, entanglements between polymer chains do not obtain. Under these conditions, contact of the solution with water does not result in gelation, but rather the polymer forms the pseudoemulsion phase described herein. Thus, polymer concentration is the major variable and dominates which phase (aqueous or hydrocarbon) is viscosified.

EXAMPLE 4

Table V shows the effectiveness of 6.05 mole percent sulfonated polystyrene as a viscosifier for a 10 percent hydrochloric acid solution. The data indicate that acid solutions containing pseudo-emulsion particles can be used to significantly enhance the viscosity of the aqueous acid phase even though the sulfonated polymer is hydrocarbon soluble. The viscosity of the hydrocarbon solvent containing the sulfonated polymer is less than 100 centipoise. The data also show that the pseudo-emulsion phase can be produced over a wide range of "dilution" with little change in viscosity. Each individual sphere is capable of expanding to accommodate the increased aqueous acid phase volume by absorption through the polymer membrane. The size of each sphere increases, but the volume fraction of spheres remains constant.

## TABLE V

### VISCOSITY (30 RPM) OF PSEUDO-EMULSION*
### VERSUS VOLUME OF HCl SOLUTION (10 %)

| Solution Volume (ml)** | Viscosity (cps) |
|---|---|
| 25 | 696 |
| 30 | 500 |
| 35 | 384 |
| 40 | 544 |
| 45 | 592 |

*Initial solution concentrations:  15 ml. at 0.5 g/l of 6.05 mole % sulfo-polystyrene.

**Amount of acid solution used to prepare pseudo-emulsion phase.

- 21 -

00093596

EXAMPLE 5

Table VI shows the effectiveness of utilizing a nonionic surfactant (BASF Pluronic[R] F-108) at very low concentrations in the preparation of pseudo-emulsions in 10 weight percent acid solution. The sulfonated polystyrene was initially dissolved in a xylene/methanol solvent system. The data indicates that these acid solutions containing pseudo-emulsion particles in conjugation with minute amounts of nonionic surfactant can be used to significantly enhance the viscosity of the aqueous acid solution even though the polymer is wholly hydrocarbon soluble. Moreover, the data show. that the surfactant produces marked enhanced viscosity over that observed without surfactant present (Table V). The data also show that these pseudo-emulsion systems can be produced over a wide range of "dilution" with relatively minor modification in viscosity.

TABLE VI

VISCOSITY (12 RPM) OF PSEUDO-EMULSION (NaSPS) VERSUS VOLUME OF HCl SOLUTION (0.04 g/l NONIONIC SURFACTANT)

| Solution Volume (ml.)* | Viscosity (cps) |
|---|---|
| 25 | 5,831 |
| 35 | 4,582 |
| 45 | 5,831 |

*Amount of acid solution used to prepare pseudo-emulsion phase. Concentration of acid is 10.0 weight percent.

CLAIMS:

1. A process for forming a thickened aqueous fluid, wherein such aqueous fluid is selected from water and aqueous acid solution *and* having a viscosity of at least about 50 cps which comprises :.

(a) forming a solvent system comprising an organic liquid and a polar cosolvent, said polar cosolvent being less than about 10 weight percent of said solvent system, the viscosity of said solvent system being less than about 1000 cps;

(b) dissolving a water insoluble, unneutralized or neutralised sulphonated polymer in said solvent system to form a solution, the concentration of said unneutralized or neutralised sulphonated polymer in said solution being about 0.01 to about 0.5 weight percent, the viscosity of said solution being less than about 2000 cps; and

(c) adding about 5 to about 500 volume percent of said aqueous fluid to said solution, said aqueous fluid being immiscible with said solution and with said polar cosolvent wherein said water insoluble, neutralised sulphonated polymer transfers from said organic liquid to said aqueous fluid causing the viscosity of said aqueous fluid to increase to at least 50 cps.

2. A process according to claim 1 which includes a means for removing said organic liquid from said aqueous fluid.

3. A process according to either of claims 1 and 2 wherein said unneutralized or neutralized sulfonated polymer has about 10 (free acid) to about 200 meq. of pendant $SO_3H$ groups per 100 grams of polymer.

4.    A process according to any one of the preceding claims wherein the sulphonate groups are neutralised with a metal counterion selected from antimony, tin, lead and Groups IA, IIA, IB or IIB of the Periodic Table of Elements.

5.    A process according to any one of the preceding claims wherein said neutralised sulphonated polymer is formed from an elastomeric or thermoplastic polymer.

6.    A process according to any one of the preceding claims wherein said polar cosolvent is selected from aliphatic amines, mono-, di or tri- functional aliphatic alcohols, water miscible amides, acetamides, phosphates, lactones and mixtures thereof.

7.    A process according to any one of the preceding claims wherein said organic liquid is selected from aromatic hydrocarbons, ketones, chlorinated aliphatic hydrocarbons, aliphatic hydrocarbons, cyclic aliphatic ethers, aliphatic ethers, organic aliphatic esters and mixtures thereof.

8.    A process according to any one of the preceding claims wherein said aqueous fluid has a nonionic surfactant incorporated therein.

9.    A process according to claim 8 wherein said nonionic surfactant is selected from BASF (Pluronics[R]), ICI (Atlas[R]) ICI (Bris[R]) and ICI (Arlacel[R]), ICI (Tween[R] series), 3M (Fluorad[R]) and Shenex (Adol[R]), preferably polyethylene oxide - polypropylene oxide - block copolymer (polyols).

10.    A process according to any one of the preceding claims wherein the viscosity of the solvent system is less than 100 cps and the viscosity of the solution formed by dissolving the polymer in said solvent system is less than 200 cps.

European Patent Office

**EUROPEAN SEARCH REPORT**

0093596

Application number

EP 83 30 2437

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-4 282 130 (R.D. LUNDBERG et al.) <br> * Column 1, lines 10-27; column 4, lines 31-53; column 7, lines 52-62 * | 1,3-7 | C 08 J 3/08 <br> C 08 L 57/06 <br> B 01 J 13/00 |
| X | US-A-4 322 329 (R.D. LUNDBERG et al.) <br> * Column 1, lines 14-31; column 4, lines 36-58; column 6, lines 9-20 * | 1,3-7 | |
| A | US-A-4 313 862 (R.D. LUNDBERG et al.) <br> * Column 1, lines 15-28; column 4, lines 10-39; column 5, line 59 - column 6, line 68 * | 1,4,5, 7 | |
| A | US-A-3 770 682 (HUBBARD et al.) <br> * Column 6, lines 58-69 * | 1 | TECHNICAL FIELDS SEARCHED (Int. Cl. ³) <br><br> C 08 J <br> C 08 L <br> C 09 D <br> C 09 K <br> E 21 B <br> B 01 J |

The present search report has been drawn up for all claims

| Place of search <br> THE HAGUE | Date of completion of the search <br> 14-07-1983 | Examiner <br> KERRES P.M.G. |
|---|---|---|